# EUROPEAN PATENT SPECIFICATION

(11) **EP 2 426 997 B1**
(45) Date of publication and mention of the grant of the patent: **07.03.2018**
(21) Application number: 10819896.1
(22) Date of filing: 27.09.2010
(51) Int. Cl.: H04L 1/00, H04L 5/00, H04L 27/26, H04B 7/26, H04L 1/16, H04L 1/18, H04W 84/04

(54) **SENDING UPLINK CONTROL INFORMATION ON A BACKHAUL TO A BASE STATION BY A RELAY NODE**
SENDEN VON UPLINK-STEUERINFORMATIONEN ÜBER EIN BACKHAUL BEI EINEM RELAIS-KNOTEN ZU EINER BASISSTATION
ENVOI DES INFORMATIONS DE COMMANDE DE LIAISON MONTANTE SUR UNE LIAISON TERRESTRE A UNE STATION DE BASE PAR UN NOEUD RELAIS

(30) Priority: 29.09.2009 CN 200910176397
(43) Date of publication of application: 07.03.2012
(73) Proprietor: ZTE Corporation, Shenzhen, Guangdong 518057 (CN)
(72) Inventor: YANG, Jin, Shenzhen Guangdong 518057 (CN); BI, Feng, Shenzhen Guangdong 518057 (CN); LIANG, Feng, Shenzhen Guangdong 518057 (CN); YUAN, Ming, Shenzhen Guangdong 518057 (CN); WU, Shuanshuan, Shenzhen Guangdong 518057 (CN)
(74) Representative: Manitz Finsterwald Patentanwälte PartmbB
(86) International application number: PCT/CN2010/077370
(87) International publication number: WO 2011/038667

(56) References cited:
- EP-A2- 1 890 440
- CN-A- 1 964 225
- CN-A- 101 442 357
- US-A1- 2007 135 059
- US-A1- 2009 041 139
- TEXAS INSTRUMENTS: "Design of the UL Backhaul for a Type I Relay", 3GPP DRAFT; R1-093169 TI RELAY_UL_BACKHAUL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090819, 19 August 2009 (2009-08-19), XP050351526, [retrieved on 2009-08-19]
- LG ELECTRONICS: "RAN1 Specification Issues of eNB-to-RN Backhauling in UL Resource", 3GPP DRAFT; R1-092119 RAN1 SPEC ISSUE OF BACKHAULING IN UL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090428, 28 April 2009 (2009-04-28), XP050339564, [retrieved on 2009-04-28]
- ZTE: "Subframe structure and timing offset for UL measurement", 3GPP DRAFT; R1-093203 SUBFRAME STRUCTURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090819, 19 August 2009 (2009-08-19), XP050351556, [retrieved on 2009-08-19]
- NOKIA ET AL: "Improved Access-backhaul Partition Scheme for TDD Relay", 3GPP DRAFT; R1-093309-IMPROVED ACCESS-BACKHAUL PARTITION SCHEME FOR TDD RELAY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090818, 18 August 2009 (2009-08-18), XP050351633, [retrieved on 2009-08-18]

## Description

### Technical Field

The present invention relates to the mobile communication field, and particularly, to a method for sending uplink control information.

### Background of the Related Art

The Relay technique, acting as a kind of new techniques, draws wide attention, and is considered as a key technique of the B3G/4G. Since the future wireless communication or cellular system demands to improve the network coverage and support higher speed transmission, which brings a new challenge for the wireless communication technique. At the same time, the expense problem of system establishment and maintenance becomes more outstanding. With the increase of the transmission speed and the communication distance, the problem of the energy consumption of the battery also becomes outstanding, and the future wireless communication will adopt the higher frequency, which will cause the more serious path loss attenuation. By the relay technique, the traditional single hop link can be divided into a plurality of multiple-hop links, and since the distance is shorten, the path loss is greatly reduced, which facilitates improving the transmission quality and expanding the communication range, thereby providing faster and better quality services for users.

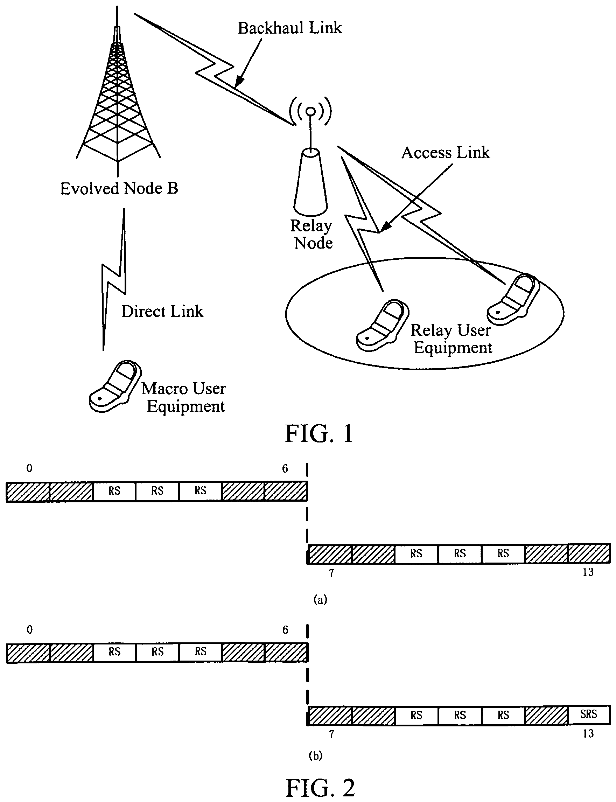

In the network introduced the Relay Node (RN), as shown in FIG. 1, the link between the node B, namely the Evolved Node B (eNB), and the Macro User Equipment (M-UE) in the network is called as the Direct link, the link between the node B and the relay node is called as the Backhaul Link, and the link between the relay node and the Relay User Equipment (R-UE) is called as the Access Link.

On the direct link of the Long Term Evolution (LTE) system, the Physical Uplink Control Channel (PUCCH) mainly bears two kinds of information: Hybrid Automatic Repeat reQuest (HARQ) feedback information, namely the acknowledgement or negative acknowledgment (ACK/NACK) information, of which the corresponding Physical Uplink Control Channel is the PUCCH format 1/1a/1b; and the channel quality information, including the Channel Quality Indication (CQI), the Precoding Matrix Indicator (PMI) and the Rank Indication (RI), of which the corresponding uplink control channel is the PUCCH format 2/2a/2b. The processing methods of the uplink control channel for these two kinds of information are different.

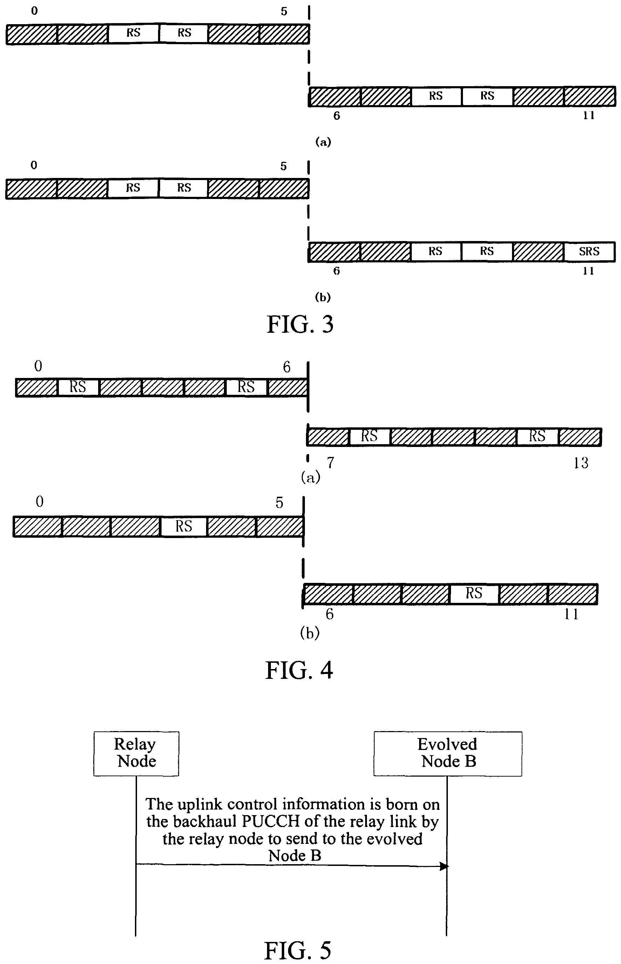

The channel structure of the PUCCH format 1/1a/1b is shown as FIG. 2 and FIG. 3. When the system frame structure adopts the Normal Cyclic Prefix (Normal CP), each subframe includes 14 Single-carrier Frequency Division Multiple Access (SC-FDMA) symbols, as shown in FIG. 2, each subframe includes 2 slots, and each slot includes 7 SC-FDMA symbols, and Hopping is carried out between slots. FIG. 2(a) is the normal structure, wherein #0, #1, #5, #6, #7, #8, #12 and #13 symbols bear acknowledgment (ACK)/negative acknowledgment (NACK) information, and the left #2, #3, #4, #9, #10 and #11 symbols map the Reference Signal (RS). FIG. 2(b) is the Shortened structure which bears the Sounding Reference Signal (SRS) at the same time, wherein #0, #1, #5, #6, #7, #8 and #12 symbols bear the ACK/NACK information, the #13 symbol bears the SRS, and the left #2, #3, #4, #9, #10 and #11 symbols map the Reference Signal. When the system frame structure adopts the Extended Cyclic Prefix (Extended CP), each subframe includes 12 SC-FDMA symbols, as shown in FIG. 3, each subframe includes 2 slots, each slot includes 6 SC-FDMA symbols, and Hopping is carried out between slots. FIG. 3(a) is the normal structure, wherein #0, #1, #4, #5, #6, #7, #10 and #11 symbols bear ACK/NACK information, the left #2, #3, #8 and #9 symbols map the RS, FIG. 3(b) is the shortened structure, wherein the #0, #1, #4, #5, #6, #7 and #10 symbols bear ACK/NACK information, the #11 symbol bears the SRS, and left #2, #3, #8 and #9 symbols map the RS.

The PUCCH format 2/2a/2b is as shown in FIG. 4. When the system frame structure adopts the normal cyclic prefix, each subframe includes 14 SC-FDMA symbols, as shown in FIG. 4(a), and each subframe includes 2 slots, each slot includes 7 SC-FDMA symbols, and hopping is carried out between slots, wherein #0, #2, #3, #4, #6, #7, #9, #10, #11 and #13 symbols bear the channel quality information, and the left #1, #5, #8 and #12 symbols map the RS. When the system frame structure adopts the extended cyclic prefix, each subframe includes 12 SC-FDMA symbols, as shown in FIG. 4(b), and each subframe includes 2 slots, each slot includes 6 SC-FDMA symbols, and hopping is carried out between slots, wherein #0, #1, #2, #4, #5, #6, #7, #8, #10 and #11 symbols bear the ACK/NACK information, and the left #3 and #9 symbols map the RS.

On the direct link, the macro user equipment maps the generated ACK/NACK information or channel quality information to allocated physical resources according to the above PUCCH format after carrying out encoding and frequency domain expansion and so on.

On the backhaul link, since the relay node demands a certain transformation interval between the receiving and sending transformation of the signal relay forwarding, and when configuring the backhaul uplink subframe, the number of the practically available SC-FDMA symbols by the relay node for the uplink transmission is less than the number of the symbols included in one subframe, namely when it is the Normal CP, the number of the available symbols is less than 14, when it is the Extended CP, the number of the available symbols is less than 12, and thus the channel structure of the Backhaul Physical Uplink Control Channel is different from that of the PUCCH. The structures of the Physical Uplink Control Channel on the direct link and the backhaul link are different, and the processing for the uplink control information on the backhaul link can not be carried out according to the method of the direct link.

The features of the preamble of the independent claims are known from TEXAS INSTRUMENTS: "Design of the UL Backhaul for a Type I Relay", 3GPP DRAFT; R1-093169 TI RELAY_UL_BACKHAUL, 3GPP, MOBILE COMPETENCE CENTRE; 650, ROUTE DES LUCIOLES; F-06921 SOPHIA-ANTIPOLIS CEDEX; FRANCE, no. Shenzhen, China; 2009-08-19. Related technology is known from LG ELECTRONICS: "RAN1 Specification Issues of eNB-to-RN Backhauling in UL Resource", 3GPP DRAFT; R1-092119 RAN1 SPEC ISSUE OF BACKHAULING IN UL, 3GPP, MOBILE COMPETENCE CENTRE; 650, ROUTE DES LUCIOLES; F-06921 SOPHIA-ANTIPOLIS CEDEX; FRANCE, no. San Francisco, USA; 2009-04-28.

### Summary of the Invention

The technical problem to be solved in the present invention is to provide a method for sending uplink control information, which makes full use of the channel condition of the backhaul link and improves the transmission efficiency of the uplink control information over the backhaul link.

In order to solve the above problem, a method according to claim 1 and an relay node apparatus according to claim 11 are provided. Further improvements and embodiments are provided in the dependent claims. In the method for processing the uplink control information used for the backhaul link proposed in the present invention, it is efficiently implemented that the uplink control information of the backhaul link is born on the backhaul PUCCH by the RN to transmit to the eNB, making full use of the channel condition of the backhaul link, and improving the transmission efficiency of the uplink control information of the backhaul link.

### Brief Description of Drawings

FIG. 1 is a schematic diagram of the structure of the relay network;
FIG. 2(a) and FIG. 2(b) are schematic diagrams of the PUCCH format 1/1a/1b under the normal CP in the LTE system in the prior art;
FIG. 3(a) and FIG. 3(b) are schematic diagrams of the PUCCH format 1/1a/1b under the extended CP in the LTE system in the prior art;
FIG. 4(a) and FIG. 4(b) are schematic diagrams of the PUCCH format 2/2a/2b under the normal CP and the extended CP in the LTE system in the prior art;
FIG. 5 is a schematic diagram of the method for sending uplink control information over the backhaul link according to the example;
FIG. 6 is a schematic diagram of the method one of the PUCCH format 1 of the backhaul link under the normal CP according to the example;
FIG. 7 is a schematic diagram of the method one of the PUCCH format 1 of the backhaul link under the extended CP according to the example;
FIG. 8 is a schematic diagram of the method two of the PUCCH format 1 of the backhaul link under the normal CP according to the example;
FIG. 9 is a schematic diagram of the method two of the PUCCH format 1 of the backhaul link under the extended CP according to the example;
FIG. 10 is a schematic diagram of the method three of the PUCCH format 1 of the backhaul link under the normal CP according to the example;
FIG. 11 is a schematic diagram of the method three of the PUCCH format 1 of the backhaul link under the extended CP according to the example;
FIG. 12 is a schematic diagram of the method four of the PUCCH format 1 of the backhaul link under the normal CP according to the example;
FIG. 13 is a schematic diagram of the method four of the PUCCH format 1 of the backhaul link under the extended CP according to the example;
FIG. 14 is a schematic diagram of the method one of the PUCCH format 2 of the backhaul link under the normal CP according to the example;
FIG. 15 is a schematic diagram of the method one of the PUCCH format 2 of the backhaul link under the extended CP according to the example;
FIG. 16 is a schematic diagram of the method two of the PUCCH format 2 of the backhaul link under the normal CP according to the example;
FIG. 17 is a schematic diagram of the method two of the PUCCH format 2 of the backhaul link under the extended CP according to the example;
FIG. 18 is a schematic diagram of the method three of the PUCCH format 2 of the backhaul link under the normal CP according to the example;
FIG. 19 is a schematic diagram of the method three of the PUCCH format 2 of the backhaul link under the extended CP according to the example.

### Preferred Embodiments of the Present Invention

As shown in FIG. 5, the method for sending uplink control information on a backhaul link comprises: the uplink control information born on a backhaul Physical Uplink Control Channel (PUCCH) being sent to an eNB by a relay node, and besides said uplink control information, the backhaul PUCCH further bearing the Reference signal, and further including 1 or 2 Single-carrier Frequency Division Multiple Access (SC-FDMA) symbols as the guard interval, which is for the transformation of the receiving/sending and sending/receiving states of the signal of the RN. The uplink control information includes but is not limited to the HARQ feedback information ACK/NACK information and/or the channel quality information CQI/PMI/RI.

The eNB configures the PUCCH physical resources indicating the backhaul link of the relay node, allocates Resource Block (RB) pairs for bearing the uplink control information for the relay node, and the allocated RB pair is situated at the two ends of the system bandwidth which is similar to the PUCCH physical resource RB pair of the M-UE, the backhaul PUCCH and the PUCCH of the M-UE can be configured to be multiplexed in the same RB pair, and the separate RB pair also can be allocated to the backhaul PUCCH. The eNB also can configure the separate RB to bear the backhaul PUCCH for the RN according to the system demands.

In the present invention, the uplink subframe which is configured to send the uplink signal by the RN to the eNB is called as the backhaul uplink subframe, and uplink subframe which is not for sending the uplink signal by the RN to the eNB is called as the non backhaul uplink subframe. The backhaul PUCCH is configured on the backhaul uplink subframe, and the RN can determine to adopt the corresponding backhaul PUCCH processing method according to the position of the configured subframe where the backhaul PUCCH is situated, comprising following four methods:
the method one, the eNB configures the current uplink subframe as the backhaul uplink subframe, and configures the RB pair corresponding to the backhaul PUCCH on the backhaul uplink subframe for the RN, and when the previous uplink subframe and the posterior uplink subframe of the backhaul uplink subframe are all the non backhaul uplink subframes, the first Single-carrier Frequency Division Multiple Access symbol and the last Single-carrier Frequency Division Multiple Access symbol in the backhaul PUCCH sent by the RN to the eNB act as the interval of the signal receiving and sending transformation.

The method two, the eNB configures the current uplink subframe as the backhaul uplink subframe, and configures the RB pair corresponding to the backhaul PUCCH on the backhaul uplink subframe for the RN, and when the previous uplink subframe of the backhaul uplink subframe is the backhaul uplink subframe and the posterior uplink subframe of the backhaul uplink subframe is the non backhaul uplink subframe, the last Single-carrier Frequency Division Multiple Access symbol in the backhaul PUCCH sent by the RN to the eNB acts as the interval of the signal receiving and sending transformation.

The method three, the eNB configures the current uplink subframe as the backhaul uplink subframe, and configures the RB pair corresponding to the backhaul PUCCH on the backhaul uplink subframe for the RN, and when the previous uplink subframe of the backhaul uplink subframe is the non backhaul uplink subframe and the posterior uplink subframe of the backhaul uplink subframe is the backhaul uplink subframe, the first Single-carrier Frequency Division Multiple Access symbol in the backhaul PUCCH sent by the RN to the eNB acts as the interval of the signal receiving and sending transformation.

The method four, the eNB configures the current uplink subframe as the backhaul uplink subframe, and configures the RB corresponding to the backhaul PUCCH on the first slot of the backhaul uplink subframe for the RN, and the first Single-carrier Frequency Division Multiple Access symbol and the last Single-carrier Frequency Division Multiple Access symbol in the backhaul PUCCH sent by the RN to the eNB act as the interval of the signal receiving and sending transformation.

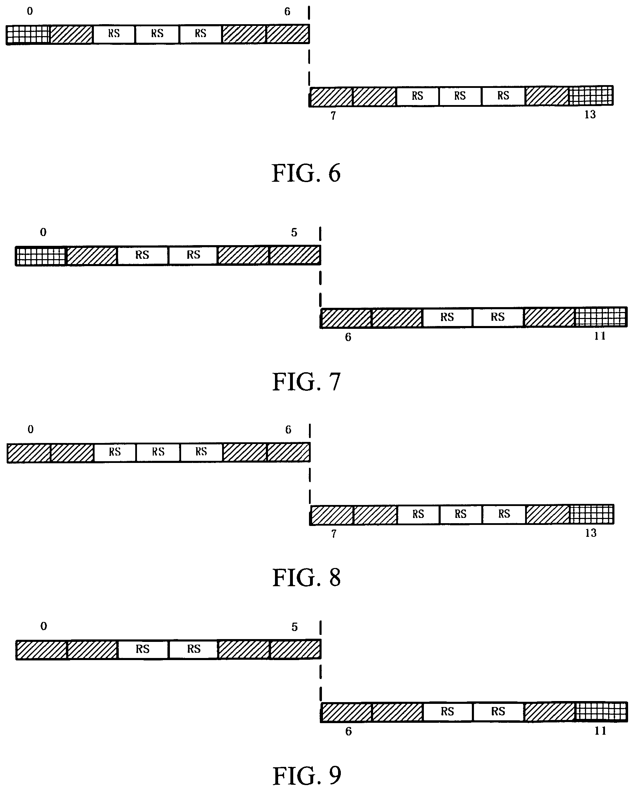

The uplink control information is the HARQ feedback information, namely the ACK/NACK information, the format of the backhaul PUCCH is the PUCCH format 1 of the backhaul link, and the particular formats corresponding to the above four methods are as follows:
in the method one, when the system adopts the Normal CP, as shown in FIG. 6, in the physical resources of the backhaul PUCCH allocated by the eNB, namely the allocated RB pair, #0 and #13 symbols act as the signal receiving and sending transformation time of the RN, the ACK/NACK information is born on the #1, #5, #6, #7, #8 and #12 symbols by the RN, and the left #2, #3, #4, #9, #10 and #11 symbols bear the RS.

When the system adopts the Extended CP, as shown in FIG. 7, in the physical resources of the PUCCH backhaul allocated by the eNB, namely the allocated RB pair, #0 and #11 symbols act as the signal receiving and sending transformation time of the RN, the ACK/NACK information is born on the #1, #4, #5, #6, #7 and #10 symbols by the RN, and the left #2, #3, #8 and #9 symbols map the RS.

In the method two, when the system adopts the Normal CP, as shown in FIG. 8, in the physical resources of the backhaul PUCCH allocated by the eNB, namely the allocated RB pair, the #13 symbol acts as the signal receiving and sending transformation time of the RN, the ACK/NACK information is born on the #0, #1, #5, #6, #7, #8 and #12 symbols by the RN, and the left #2, #3, #4, #9, #10 and #11 symbols bear the RS.

When the system adopts the Extended CP, as shown in FIG. 9, in the physical resources of the backhaul PUCCH allocated by the eNB, namely the allocated RB pair, the #11 symbol acts as the signal receiving and sending transformation time of the RN, the ACK/NACK information is born on the #0, #1, #4, #5, #6, #7 and #10 symbols by the RN, and the left #2, #3, #8 and #9 symbols bear the RS.

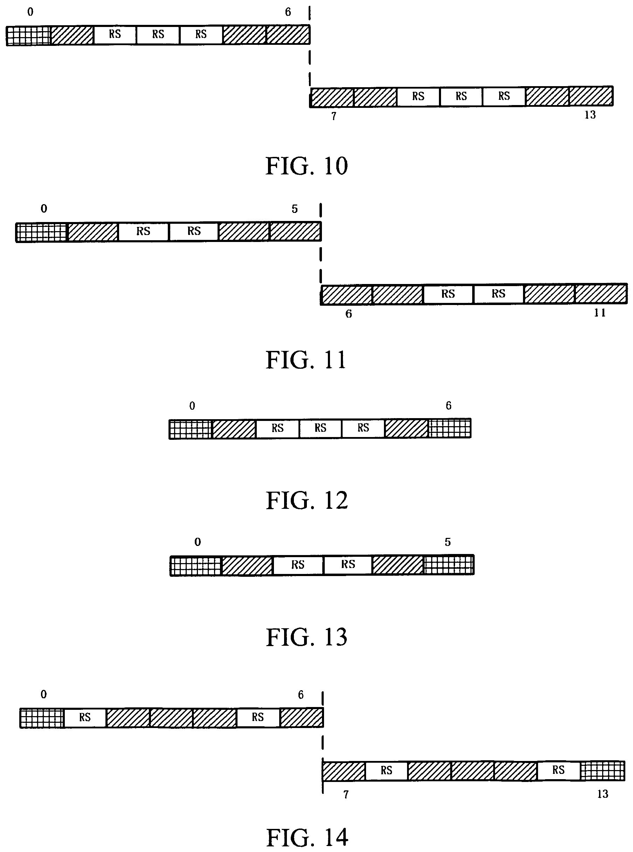

In the method three, when the system adopts the Normal CP, as shown in FIG. 10, in the physical resources of the backhaul PUCCH allocated by the eNB, namely the allocated RB pair, the #0 symbol acts as the signal receiving and sending transformation time of the RN, the ACK/NACK information is born on the #1, #5, #6, #7, #8, #12 and #13 symbols by the RN, and the left #2, #3, #4, #9, #10 and #11symbols bear the RS.

When the system adopts the Extended CP, as shown in FIG. 11, in the physical resources of the PUCCH backhaul link allocated by the eNB, namely the allocated RB pair, the #0 symbol acts as the signal receiving and sending transformation time of the RN, the ACK/NACK information is born on the #1, #4, #5, #6, #7, #10 and #11 symbols by the RN, and the left #2, #3, #8 and #9 symbols bear the RS.

In the method four, when the system adopts the Normal CP, as shown in FIG. 12, in the physical resources of the PUCCH backhaul link allocated by the eNB, namely the allocated RB pair, #0 and #6 symbols act as the signal receiving and sending transformation time of the RN, the ACK/NACK information is born on the #1 and #5 symbols by the RN, and the left #2, #3 and #4 symbols bear the RS.

When the system adopts the Extended CP, as shown in FIG. 13, in the physical resources of the backhaul PUCCH allocated by the eNB, namely the allocated RB pair, #0 and #5 symbols act as the signal receiving and sending transformation time of the RN, the RN bears the ACK/NACK information is born on the #1 and #4 symbols by the RN, and the left #2 and #3 symbols bear the RS.

When the uplink control information is the channel quality information, the format of the backhaul PUCCH is the PUCCH format 2 of the backhaul link, and the particular formats corresponding to the above three methods are as follows:
the method one, when the system adopts the Normal CP, as shown in FIG. 14, in the physical resources of the backhaul PUCCH allocated by the eNB, namely the allocated RB pair, #0 and #13 symbols act as the signal receiving and sending transformation time of the RN, the channel quality information is born on #2, #3, #4, #6, #7, #9, #10 and #11 symbols by the RN, and the left #1, #5, #8 and #12 symbols bear the RS.

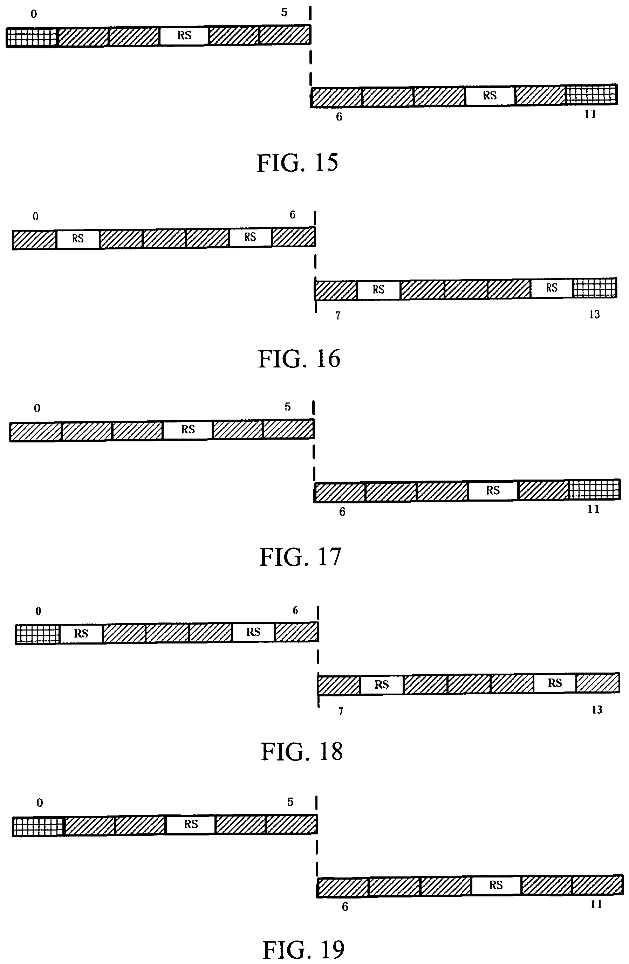

When the system adopts the Extended CP, as shown in FIG. 15, in the physical resources of the backhaul PUCCH allocated by the eNB, namely the allocated RB pair, #0 and #11 symbols act as the signal receiving and sending transformation time of the RN, the channel quality information is born on the #1, #2, #4, #5, #6, #7, #8 and #10 symbols by the RN, and the left #3 and #9 symbols bear the RS.

The method two, when the system adopts the Normal CP, as shown in FIG. 16, in the PUCCH physical resources of the backhaul link allocated by the eNB, namely the allocated RB pair, the #13 symbol acts as the signal receiving and sending transformation time of the RN, the channel quality information is born on #0, #2, #3, #4, #6, #7, #9, #10 and #11 symbols by the RN, and the left #1, #5, #8 and #12 symbols bear the RS.

When the system adopts the Extended CP, as shown in FIG. 17, in the physical resources of the backhaul PUCCH allocated by the eNB, namely the allocated RB pair, the #11 symbol acts as the signal receiving and sending transformation time of the RN, the channel quality information is born on the #0, #1, #2, #4, #5, #6, #7, #8 and #10 symbols by the RN, and the left #3 and #9 symbols bear the RS.

The method three, when the system adopts the Normal CP, as shown in FIG. 18, in the physical resources of the backhaul PUCCH allocated by the eNB, namely the allocated RB pair, the #0 symbol acts as the signal receiving and sending transformation time of the RN, the channel quality information is born on #2, #3, #4, #6, #7, #9, #10, #11 and #13 symbols by the RN, and the left #1, #5, #8 and #12 symbols bear the RS.

When the system adopts the Extended CP, as shown in FIG. 19, in the physical resources of the backhaul PUCCH allocated by the eNB, namely the allocated RB pair, the #0 symbol acts as the signal receiving and sending transformation time of the RN, the channel quality information is born on the #1, #2, #4, #5, #6, #7, #8, #10 and #11 symbols by the RN, and the left #3 and #9 symbols bear the RS.

Particular example one:
the system adopts the Normal CP, the #3 subframe in the radio frame is configured as the Backhaul uplink subframe, and the RB pair is configured on the #3 subframe for the RN to act as the backhaul PUCCH resources used for bearing the HARQ feedback information. Since the #2 and #4 subframes are non Backhaul uplink subframes, the RN adopts the method one of processing the backhaul PUCCH to carry out the bearing processing of the ACK/NACK information according to the system configuration. The RN maps the ACK/NACK information processed by the physical layer to the #1, #5, #6, #7, #8 and #12 symbols of the #3 subframe according to the system configuration, maps the corresponding RS to the #2, #3, #4, #9, #10 and #11 symbols, and carries out the uplink transmission to the eNB, as shown in FIG. 6.

Particular example two:
the system adopts the Extended CP, the #3 subframe in the radio frame is configured as the Backhaul uplink subframe, and the RB pair is configured on the #3 subframe for the RN to act as the backhaul PUCCH resources for bearing the channel quality information. Since the #2 subframe is the Backhaul uplink subframe and #4 subframe is the non Backhaul uplink subframe, the RN adopts the method two of processing the backhaul PUCCH to carry out the bearing processing of the channel quality information according to the system configuration. The RN maps the channel quality information processed by the physical layer to the #0, #1, #2, #4, #5, #6, #7, #8 and #10 symbols of the #3 subframe according to the system configuration, maps the corresponding RS to the #3 and #9 symbols, and carries out the uplink transmission to the eNB, as shown in FIG. 17.

Particular example three:
the system adopts the Normal CP, the #3 subframe in the radio frame is configured as the Backhaul uplink subframe, and the RB pair is configured on the #3 subframe for the RN to act as the backhaul PUCCH resources for bearing the channel quality information. Since the #2 subframe is the non Backhaul uplink subframe and the #4 subframe is the Backhaul uplink subframe, the RN adopts the method three of processing the backhaul PUCCH to carry out the bearing processing of the channel quality information according to the system configuration. The RN maps the channel quality information processed by the physical layer to the #2, #3, #4, #6, #7, #9, #10, #11 and #13 symbols of the #3 subframe according to the system configuration, maps the corresponding RS to the #1, #5, #8 and #12 symbols, and carries out the uplink transmission to the eNB, as shown in FIG. 18.

Particular example four:
the system adopts the Normal CP, the #8 subframe in the radio frame is configured as the Backhaul uplink subframe, and one RB on the first slot of the #8 subframe is configured on the #8 subframe for the RN to act as the backhaul PUCCH resources for bearing the HARQ feedback information. The RN adopts the method four of processing the backhaul PUCCH to carry out the bearing processing of the ACK/NACK information according to the system configuration. The RN maps the ACK/NACK information processed by the physical layer to the #1 and #5 symbols of the first slot of the #8 subframe according to the system configuration, maps the corresponding RS to the #2, #3 and #4 symbols, and carries out the uplink transmission to the eNB, as shown in FIG. 12.

Based on the above examples, the present invention further discloses an apparatus for sending uplink control information, which is for the relay node sending the uplink control information on the backhaul link, and this apparatus comprises:
a sending module, which is configured to: bear the uplink control information on the Backhaul Physical Uplink Control Channel to send to the evolved node B, wherein the information born on the Backhaul Physical Uplink Control Channel includes: the uplink control information and the Reference Signal, and further includes 1 or 2 Single-carrier Frequency Division Multiple Access symbols as the guard interval.

Wherein, when said uplink control information is acknowledgement or negative acknowledgement information, in the case of the system adopting the normal cyclic prefix, the #0 and #13 symbols in the backhaul uplink subframe act as the guard interval, #1, #5, #6, #7, #8 and #12 symbols bear said acknowledgement or negative acknowledgement information, and #2, #3, #4, #9, #10 and #11 symbols bear the Reference Signal; in the case of the system adopting the extended cyclic prefix, the #0 and #11 symbols in the backhaul uplink subframe act as the guard interval, #1, #4, #5, #6, #7 and #10 symbols bear said acknowledgement or negative acknowledgement information, and #2, #3, #8 and #9 symbols bear the Reference Signal;
or
when said uplink control information is channel quality information, in the case of the system adopting the normal cyclic prefix, the #0 and #13 symbols in said backhaul uplink subframe act as the guard interval, #2, #3, #4, #6, #7, #9, #10 and #11 symbols bear said channel quality information, and #1, #5, #8 and #12 symbols bear the Reference Signal; in the case of the system adopting the extended cyclic prefix, the #0 and #11 symbols in the backhaul uplink subframe act as the guard interval, #1, #2, #4, #5, #6, #7, #8 and #10 symbols bear said channel quality information, and #3 and #9 symbols bear the Reference Signal;
or
when said uplink control information is acknowledgement or negative acknowledgement information, in the case of the system adopting the normal cyclic prefix, the #13 symbol in the backhaul uplink subframe acts as the guard interval, #0, #1, #5, #6, #7, #8 and #12 symbols bear said acknowledgement or negative acknowledgement information, and #2, #3, #4, #9, #10 and #11 symbols bear the Reference Signal; in the case of the system adopting the extended cyclic prefix, the #11 symbol in the backhaul uplink subframe acts as the guard interval, #0, #1, #4, #5, #6, #7 and #10 symbols bear said acknowledgement or negative acknowledgement information, and #2, #3, #8 and #9 symbols bear the Reference Signal;
or
when said uplink control information is channel quality information, in the case of the system adopting the normal cyclic prefix, the #13 symbol in said backhaul uplink subframe acts as the guard interval, #0, #2, #3, #4, #6, #7, #9, #10 and #11 symbols bear said channel quality information, and #1, #5, #8 and #12 symbols bear the Reference Signal; in the case of the system adopting the extended cyclic prefix, the #11 symbol in the backhaul uplink subframe acts as the guard interval, #0, #1, #2, #4, #5, #6, #7, #8 and #10 symbols bear said channel quality information, and #3 and #9 symbols bear the Reference Signal;
or
when said uplink control information is acknowledgement or negative acknowledgement information, in the case of the system adopting the normal cyclic prefix, the #0 symbol in the backhaul uplink subframe acts as the guard interval, #1, #5, #6, #7, #8, #12 and #13 symbols bear said acknowledgement or negative acknowledgement information, and #2, #3, #4, #9, #10 and #11 symbols bear the Reference Signal; in the case of the system adopting the extended cyclic prefix, the #0 symbol in the backhaul uplink subframe acts as the guard interval, #1, #4, #5, #6, #7, #10 and #11 symbols bear said acknowledgement or negative acknowledgement information, and #2, #3, #8 and #9 symbols bear the Reference Signal;
or
when said uplink control information is channel quality information, in the case of the system adopting the normal cyclic prefix, the #0 symbol in said backhaul uplink subframe acts as the guard interval, #2, #3, #4, #6, #7, #9, #10, #11 and #13 symbols bear said channel quality information, and #1, #5, #8 and #12 symbols bear the Reference Signal; in the case of the system adopting the extended cyclic prefix, the #0 symbol in the backhaul uplink subframe acts as the guard interval, #1, #2, #4, #5, #6, #7, #8, #10 and #11 symbols bear said channel quality information, and #3 and #9 symbols bear the Reference Signal;
or
when said uplink control information is acknowledgement or negative acknowledgement information, in the case of the system adopting the normal cyclic prefix, the #0 and #6 symbols in the backhaul uplink subframe act as the guard interval, #1 and #5 symbols bear said acknowledgement or negative acknowledgement information, and #2, #3 and #4 symbols bear the Reference Signal; in the case of the system adopting the extended cyclic prefix, the #0 and #5 symbols in the backhaul uplink subframe act as the guard interval, #1 and #4 symbols bear said acknowledgement or negative acknowledgement information, and #2 and #3 symbols bear the Reference Signal.

The above description is only particular examples of the present invention, and is not for limiting the present invention, and various corresponding modifications and transformations can be made to the present invention by those having ordinary skills in the art. Modifications, equivalent substitutions and improvements within the principle of the present invention shall all fall within the protection scope of the present invention as defined in the claims.

### Industrial Applicability

In the present invention, it can be efficiently implemented that the uplink control information of the Backhaul Link is born on Backhaul PUCCH by the RN to transmit to the eNB, and making full use of the channel condition of the Backhaul Link, and improving the transmission efficiency of the uplink control information of the Backhaul Link.

## Claims

1. A method for sending uplink control information by a relay node over a backhaul link, the method comprising bearing the uplink control information on a backhaul Physical Uplink Control Channel to send to an evolved node B, **characterized in that** said method further comprises:
bearing information on said backhaul Physical Uplink Control Channel including the uplink control information and a reference signal, and further including 1 or 2 Single-carrier Frequency Division Multiple Access, SC-FDMA, symbols as a guard interval,
wherein backhaul Physical Uplink Control Channel resources on a backhaul uplink subframe for the relay node are configured by said evolved node B, and
when a previous uplink subframe of said backhaul uplink subframe is a backhaul uplink subframe and a posterior subframe of said backhaul uplink subframe is a non backhaul uplink subframe, a last Single-carrier Frequency Division Multiple Access symbol of said backhaul Physical Uplink Control Channel sent by said relay node to said evolved node B acts as the guard interval, wherein
said backhaul uplink subframe refers to an uplink subframe configured for sending said uplink signal by said relay node to said evolved node B, and said non backhaul uplink subframe refers to an uplink subframe which is not for sending said uplink signal by said relay node to said evolved node B.

2. The method as claimed in claim 1, wherein
when a previous uplink subframe and a posterior subframe of said backhaul uplink subframe are all non backhaul uplink subframes, a first Single-carrier Frequency Division Multiple Access symbol and a last Single-carrier Frequency Division Multiple Access symbol of said backhaul Physical Uplink Control Channel sent by said relay node to said evolved node B act as the guard interval.

3. The method as claimed in claim 1 or 2, wherein
when said uplink control information is acknowledgement or negative acknowledgement information;
in a case of a system adopting a normal cyclic prefix, #0 and #13 symbols in the backhaul uplink subframe act as the guard interval, #1, #5, #6, #7, #8 and #12 symbols bear said acknowledgement or negative acknowledgement information, and #2, #3, #4, #9, #10 and #11 symbols bear the Reference Signal;
in a case of the system adopting an extended cyclic prefix, #0 and #11 symbols in the backhaul uplink subframe act as the guard interval, #1, #4, #5, #6, #7 and #10 symbols bear said acknowledgement or negative acknowledgement information, and #2, #3, #8 and #9 symbols bear the Reference Signal.

4. The method as claimed in claim 1 or 2, wherein
when said uplink control information is channel quality information;
in a case of a system adopting the normal cyclic prefix, #0 and #13 symbols in the backhaul uplink subframe act as the guard interval, #2, #3, #4, #6, #7, #9, #10 and #11 symbols bear said channel quality information, and #1, #5, #8 and #12 symbols bear the Reference Signal;
in a case of the system adopting the extended cyclic prefix, #0 and #11 symbols in the backhaul uplink subframe act as the guard interval, #1, #2, #4, #5, #6, #7, #8 and #10 symbols bear said channel quality information, and #3 and #9 symbols bear the Reference Signal.

5. The method as claimed in claim 1, wherein
when said uplink control information is acknowledgement or negative acknowledgement information;
in a case of a system adopting the normal cyclic prefix, #13 symbol in the backhaul uplink subframe acts as the guard interval, #0, #1, #5, #6, #7, #8 and #12 symbols bear said acknowledgement or negative acknowledgement information, and #2, #3, #4, #9, #10 and #11 symbols bear the Reference Signal;
in a case of the system adopting the extended cyclic prefix, #11 symbol in the backhaul uplink subframe acts as the guard interval, #0, #1, #4, #5, #6, #7 and #10 symbols bear said acknowledgement or negative acknowledgement information, and #2, #3, #8 and #9 symbols bear the Reference Signal.

6. The method as claimed in claim 1, wherein
when said uplink control information is channel quality information;
in a case of a system adopting the normal cyclic prefix, #13 symbol in the backhaul uplink subframe acts as the guard interval, #0, #2, #3, #4, #6, #7, #9, #10 and #11 symbols bear said channel quality information, and #1, #5, #8 and #12 symbols bear the Reference Signal;
in a case of the system adopting the extended cyclic prefix, #11 symbol in the backhaul uplink subframe acts as the guard interval, #0, #1, #2, #4, #5, #6, #7, #8 and #10 symbols bear said channel quality information, and #3 and #9 symbols bear the Reference Signal.

7. The method as claimed in claim 1, wherein
when a previous uplink subframe of said backhaul uplink subframe is a non backhaul uplink subframe and a posterior subframe of said backhaul uplink subframe is a backhaul uplink subframe, a first Single-carrier Frequency Division Multiple Access symbol of said backhaul Physical Uplink Control Channel sent by said relay node to said evolved node B acts as the guard interval.

8. The method as claimed in claim 1 or 7, wherein
when said uplink control information is acknowledgement or negative acknowledgement information;
in a case of a system adopting the normal cyclic prefix, #0 symbol in the backhaul uplink subframe acts as the guard interval, #1, #5, #6, #7, #8, #12 and #13 symbols bear said acknowledgement or negative acknowledgement information, and #2, #3, #4, #9, #10 and #11 symbols bear the Reference Signal;
in a case of the system adopting the extended cyclic prefix, #0 symbol in the backhaul uplink subframe acts as the guard interval, #1, #4, #5, #6, #7, #10 and #11 symbols bear said acknowledgement or negative acknowledgement information, and #2, #3, #8 and #9 symbols bear the Reference Signal.

9. The method as claimed in claim 1 or 7, wherein
when said uplink control information is channel quality information;
in a case of a system adopting the normal cyclic prefix, #0 symbol in the backhaul uplink subframe acts as the guard interval, #2, #3, #4, #6, #7, #9, #10, #11 and #13 symbols bear said channel quality information, and #1, #5, #8 and #12 symbols bear the Reference Signal;
in a case of the system adopting the extended cyclic prefix, #0 symbol in the backhaul uplink subframe acts as the guard interval, #1, #2, #4, #5, #6, #7, #8, #10 and #11 symbols bear said channel quality information, and #3 and #9 symbols bear the Reference Signal.

10. The method as claimed in claim 1, wherein
when said uplink control information is acknowledgement or negative acknowledgement information;
in a case of a system adopting the normal cyclic prefix, #0 and #6 symbols in the backhaul uplink subframe act as the guard interval, #1 and #5 symbols bear said acknowledgement or negative acknowledgement information, and #2, #3 and #4 symbols bear the Reference Signal;
in a case of the system adopting the extended cyclic prefix, #0 and #5 symbols in the backhaul uplink subframe act as the guard interval, #1 and #4 symbols bear said acknowledgement or negative acknowledgement information, and #2 and #3 symbols bear the Reference Signal.

11. A relay node apparatus for sending uplink control information over a backhaul link, and said relay node apparatus comprising: a sending module which is configured to bear the uplink control information on a backhaul Physical Uplink Control Channel to send to an evolved node B, the relay node apparatus being **characterized in that** the sending module is adapted to bear the information on the backhaul Physical Uplink Control Channel including the uplink control information and a reference signal, and further including 1 or 2 Single-carrier Frequency Division Multiple Access, SC-FDMA, symbols as a guard interval, wherein backhaul Physical Uplink Control Channel resources are configured by said evolved node B on a backhaul uplink subframe for the relay node apparatus, and when a previous uplink subframe of said backhaul uplink subframe is a backhaul uplink subframe and a posterior subframe of said backhaul uplink subframe is a non backhaul uplink subframe, the relay node apparatus is further adapted to sent to said evolved node B a last Single-carrier Frequency Division Multiple Access symbol of said backhaul Physical Uplink Control Channel that acts as the guard interval, wherein said backhaul uplink subframe refers to an uplink subframe configured for sending said uplink signal by said relay node apparatus to said evolved node B, and said non backhaul uplink subframe refers to an uplink subframe which is not for sending said uplink signal by said relay node apparatus to said evolved node B.

12. The apparatus as claimed in claim 11, wherein
when said uplink control information is acknowledgement or negative acknowledgement information; in a case of a system adopting a normal cyclic prefix, #0 and #13 symbols in a backhaul uplink subframe act as the guard interval, #1, #5, #6, #7, #8 and #12 symbols bear said acknowledgement or negative acknowledgement information, and #2, #3, #4, #9, #10 and #11 symbols bear the Reference Signal; in a case of the system adopting an extended cyclic prefix, #0 and #11 symbols in the backhaul uplink subframe act as the guard interval, #1, #4, #5, #6, #7 and #10 symbols bear said acknowledgement or negative acknowledgement information, and #2, #3, #8 and #9 symbols bear the Reference Signal;
or
when said uplink control information is channel quality information; in the case of the system adopting the normal cyclic prefix, #0 and #13 symbols in the backhaul uplink subframe act as the guard interval, #2, #3, #4, #6, #7, #9, #10 and #11 symbols bear said channel quality information, and #1, #5, #8 and #12 symbols bear the Reference Signal; in the case of the system adopting the extended cyclic prefix, #0 and #11 symbols in the backhaul uplink subframe act as the guard interval, #1, #2, #4, #5, #6, #7, #8 and #10 symbols bear said channel quality information, and #3 and #9 symbols bear the Reference Signal;
or
when said uplink control information is acknowledgement or negative acknowledgement information; in the case of the system adopting the normal cyclic prefix, #13 symbol in a backhaul uplink subframe acts as the guard interval, #0, #1, #5, #6, #7, #8 and #12 symbols bear said acknowledgement or negative acknowledgement information, and #2, #3, #4, #9, #10 and #11 symbols bear the Reference Signal; in the case of the system adopting the extended cyclic prefix, #11 symbol in the backhaul uplink subframe acts as the guard interval, #0, #1, #4, #5, #6, #7 and #10 symbols bear said acknowledgement or negative acknowledgement information, and #2, #3, #8 and #9 symbols bear the Reference Signal;
or
when said uplink control information is channel quality information; in the case of the system adopting the normal cyclic prefix, #13 symbol in the backhaul uplink subframe acts as the guard interval, #0, #2, #3, #4, #6, #7, #9, #10 and #11 symbols bear said channel quality information, and #1, #5, #8 and #12 symbols bear the Reference Signal; in the case of the system adopting the extended cyclic prefix, #11 symbol in the backhaul uplink subframe acts as the guard interval, #0, #1, #2, #4, #5, #6, #7, #8 and #10 symbols bear said channel quality information, and #3 and #9 symbols bear the Reference Signal;
or
when said uplink control information is acknowledgement or negative acknowledgement information; in the case of the system adopting the normal cyclic prefix, #0 symbol in the backhaul uplink subframe acts as the guard interval, #1, #5, #6; #7, #8, #12 and #13 symbols bear said acknowledgement or negative acknowledgement information, and #2, #3, #4, #9, #10 and #11 symbols bear the Reference Signal; in the case of the system adopting the extended cyclic prefix, #0 symbol in the backhaul uplink subframe acts as the guard interval, #1, #4, #5, #6, #7, #10 and #11 symbols bear said acknowledgement or negative acknowledgement information, and #2, #3, #8 and #9 symbols bear the Reference Signal;
or
when said uplink control information is channel quality information; in the case of the system adopting the normal cyclic prefix, #0 symbol in the backhaul uplink subframe acts as the guard interval, #2, #3, #4, #6, #7, #9, #10, #11 and #13 symbols bear said channel quality information, and #1, #5, #8 and #12 symbols bear the Reference Signal; in the case of the system adopting the extended cyclic prefix, #0 symbol in the backhaul uplink subframe acts as the guard interval, #1, #2, #4, #5, #6, #7, #8, #10 and #11 symbols bear said channel quality information, and #3 and #9 symbols bear the Reference Signal;
or
when said uplink control information is acknowledgement or negative acknowledgement information; in the case of the system adopting the normal cyclic prefix, #0 and #6 symbols in the backhaul uplink subframe act as the guard interval, #1 and #5 symbols bear said acknowledgement or negative acknowledgement information, and #2, #3 and #4 symbols bear the Reference Signal; in the case of the system adopting the extended cyclic prefix, #0 and #5 symbols in the backhaul uplink subframe act as the guard interval, #1 and #4 symbols bear said acknowledgement or negative acknowledgement information, and #2 and #3 symbols bear the Reference Signal.

## Patentansprüche

1. Verfahren zum Senden von Uplink-Steuerungsinformationen durch einen Relaisknoten über eine Rücktransportverbindung, wobei das Verfahren das Tragen der Uplink-Steuerungsinformationen auf einem physikalischen Rücktransport-Uplinksteuerungskanal zum Senden an einen Evolved Node B umfasst, **dadurch gekennzeichnet, dass** das Verfahren ferner umfasst, dass:
Informationen auf dem physikalischen Rücktransport-Uplinksteuerungskanal getragen werden, welche die Uplink-Steuerungsinformationen und ein Referenzsignal umfassen, und die ferner ein oder zwei Single Carrier Frequency Division Multiple Access Symbole SC-FDMA-Symbole als Schutzintervall umfassen,
wobei Ressourcen des physikalischen Rücktransport-Uplinksteuerungskanals auf einem Rücktransport-Uplink-Subframe für den Relaisknoten durch den Evolved Node B konfiguriert werden, und
wenn ein vorheriger Uplink-Subframe des Rücktransport-Uplink-Subframes ein Rücktransport-Uplink-Subframe ist und ein späterer Subframe des Rücktransport-Uplink-Subframes ein Nicht-Rücktransport-Uplink-Subframe ist, ein letztes Single Carrier Frequency Division Multiple Access Symbol des physikalischen Rücktransport-Uplinksteuerungskanals, das von dem Relaisknoten an den Evolved Node B gesendet wurde, als das Schutzintervall fungiert, wobei
der Rücktransport-Uplink-Subframe einen Uplink-Subframe bezeichnet, der zum Senden des Uplinksignals durch den Relaisknoten an den Evolved Node B ausgestaltet ist, und der Nicht-Rücktransport-Uplink-Subframe einen Uplink-Subframe bezeichnet, der nicht zum Senden des Uplinksignals durch den Relaisknoten an den Evolved Node B vorgesehen ist.

2. Verfahren nach Anspruch 1, wobei
wenn ein vorheriger Uplink-Subframe und ein späterer Subframe des Rücktransport-Uplink-Subframes alle Nicht-Rücktransport-Uplink-Subframes sind, ein erstes Single Carrier Frequency Division Multiple Access Symbol und ein letztes Single Carrier Frequency Division Multiple Access Symbol des physikalischen Rücktransport-Uplinksteuerungskanals, die von dem Relaisknoten an den Evolved Node B gesendet wurden, als das Schutzintervall fungieren.

3. Verfahren nach Anspruch 1 oder 2, wobei
wenn die Uplink-Steuerungsinformationen Bestätigungsinformationen oder negative Bestätigungsinformationen sind;
im Fall eines Systems, das einen normalen zyklischen Vorspann anwendet, Symbole #0 und #13 in dem Rücktransport-Uplink-Subframe als das Schutzintervall fungieren, Symbole #1, #5, #6, #7, #8 und #12 die Bestätigungsinformationen oder die negativen Bestätigungsinformationen tragen und Symbole #2, #3, #4, #9, #10 und #11 das Referenzsignal tragen;
im Fall, dass das System einen erweiterten zyklischen Vorspann anwendet, Symbole #0 und #11 in dem Rücktransport-Uplink-Subframe als das Schutzintervall fungieren, Symbole #1, #4, #5, #6, #7 und #10 die Bestätigungsinformationen oder die negativen Bestätigungsinformationen tragen und Symbole #2, #3, #8 und #9 das Referenzsignal tragen.

4. Verfahren nach Anspruch 1 oder 2, wobei
wenn die Uplink-Steuerungsinformationen Informationen zur Kanalqualität sind;
im Fall, dass ein System den normalen zyklischen Vorspann anwendet, Symbole #0 und #13 in dem Rücktransport-Uplink-Subframe als das Schutzintervall fungieren, Symbole #2, #3, #4, #6, #7, #9, #10 und #11 die Informationen zur Kanalqualität tragen und Symbole #1, #5, #8 und #12 das Referenzsignal tragen;
im Fall, dass das System den erweiterten zyklischen Vorspann anwendet, Symbole #0 und #11 in dem Rücktransport-Uplink-Subframe als das Schutzintervall fungieren, Symbole #1, #2, #4, #5, #6, #7, #8 und #10 die Informationen zur Kanalqualität tragen und Symbole #3 und #9 das Referenzsignal tragen.

5. Verfahren nach Anspruch 1, wobei
wenn die Uplink-Steuerungsinformationen Bestätigungsinformationen oder negative Bestätigungsinformationen sind;
im Fall, dass ein System den normalen zyklischen Vorspann anwendet, Symbol #13 in dem Rücktransport-Uplink-Subframe als das Schutzintervall fungiert, Symbole #0, #1, #5, #6, #7, #8 und #12 die Bestätigungsinformationen oder die negativen Bestätigungsinformationen tragen und Symbole #2, #3, #4, #9, #10 und #11 das Referenzsignal tragen;
im Fall, dass das System den erweiterten zyklischen Vorspann anwendet, Symbol #11 in dem Rücktransport-Uplink-Subframe als das Schutzintervall fungiert, Symbole #0, #1, #4, #5, #6, #7 und #10 die Bestätigungsinformationen oder die negativen Bestätigungsinformationen tragen und Symbole #2, #3, #8 und #9 das Referenzsignal tragen.

6. Verfahren nach Anspruch 1, wobei
wenn die Uplink-Steuerungsinformationen Informationen zur Kanalqualität sind;
im Fall, dass ein System den normalen zyklischen Vorspann anwendet, Symbol #13 in dem Rücktransport-Uplink-Subframe als das Schutzintervall fungiert, Symbole #0, #2, #3, #4, #6, #7, #9, #10 und #11 die Informationen zur Kanalqualität tragen und Symbole #1, #5, #8 und #12 das Referenzsignal tragen;
im Fall, dass das System den erweiterten zyklischen Vorspann anwendet, Symbol #11 in dem Rücktransport-Uplink-Subframe als das Schutzintervall fungiert, Symbole #0, #1, #2, #4, #5, #6, #7, #8 und #10 die Informationen zur Kanalqualität tragen und Symbole #3 und #9 das Referenzsignal tragen.

7. Verfahren nach Anspruch 1, wobei
wenn ein vorheriger Uplink-Subframe des Rücktransport-Uplink-Subframes ein Nicht-Rücktransport-Uplink-Subframe ist und ein späterer Subframe des Rücktransport-Uplink-Subframes ein Rücktransport-Uplink-Subframe ist, ein erstes Single Carrier Frequency Division Multiple Access Symbol des physikalischen Rücktransport-Uplinksteuerungskanals, das durch den Relaisknoten an den Evolved Node B gesendet wurde, als das Schutzintervall fungiert.

8. Verfahren nach Anspruch 1 oder 7, wobei
wenn die Uplink-Steuerungsinformationen Bestätigungsinformationen oder negative Bestätigungsinformationen sind;
im Fall eines Systems, das den normalen zyklischen Vorspann anwendet, Symbol #0 in dem Rücktransport-Uplink-Subframe als das Schutzintervall fungiert, Symbole #1, #5, #6, #7, #8, #12 und #13 die Bestätigungsinformationen oder die negativen Bestätigungsinformationen tragen und Symbole #2, #3, #4, #9, #10 und #11 das Referenzsignal tragen;
im Fall, dass das System den erweiterten zyklischen Vorspann anwendet, Symbol #0 in dem Rücktransport-Uplink-Subframe als das Schutzintervall fungiert, Symbole #1, #4, #5, #6, #7, #10 und #11 die Bestätigungsinformationen oder die negativen Bestätigungsinformationen tragen und Symbole #2, #3, #8 und #9 das Referenzsignal tragen.

9. Verfahren nach Anspruch 1 oder 7, wobei
wenn die Uplink-Steuerungsinformationen Informationen zur Kanalqualität sind;
im Fall eines Systems, das den normalen zyklischen Vorspann anwendet, Symbol #0 in dem Rücktransport-Uplink-Subframe als das Schutzintervall fungiert, Symbole #2, #3, #4, #6, #7, #9, #10, #11 und #13 die Informationen zur Kanalqualität tragen und Symbole #1, #5, #8 und #12 das Referenzsignal tragen;
im Fall, dass das System den erweiterten zyklischen Vorspann anwendet, Symbol #0 in dem Rücktransport-Uplink-Subframe als das Schutzintervall fungiert, Symbole #1, #2, #4, #5, #6, #7, #8, #10 und #11 die Informationen zur Kanalqualität tragen und Symbole #3 und #9 das Referenzsignal tragen.

10. Verfahren nach Anspruch 1, wobei
wenn die Uplink-Steuerungsinformationen Bestätigungsinformationen oder negative Bestätigungsinformationen sind;
im Fall eines Systems, das den normalen zyklischen Vorspann anwendet, Symbole #0 und #6 in dem Rücktransport-Uplink-Subframe als das Schutzintervall fungieren, Symbole #1 und #5 die Bestätigungsinformationen oder die negativen Bestätigungsinformationen tragen, und Symbole #2, #3 und #4 das Referenzsignal tragen;
im Fall, dass das System den erweiterten zyklischen Vorspann anwendet, Symbole #0 und #5 in dem Rücktransport-Uplink-Subframe als das Schutzintervall fungieren, Symbole #1 und #4 die Bestätigungsinformationen oder die negativen Bestätigungsinformationen tragen und Symbole #2 und #3 das Referenzsignal tragen.

11. Relaisknotenvorrichtung zum Senden von Uplink-Steuerungsinformationen über eine Rücktransportverbindung, und wobei die Relaisknotenvorrichtung umfasst: ein Sendemodul, das ausgestaltet ist, um die Uplink-Steuerungsinformationen auf einem physikalischen Rücktransport-Uplinksteuerungskanal zum Senden an einen Evolved Node B zu tragen, wobei die Relaisknotenvorrichtung
**dadurch gekennzeichnet ist, dass**
das Sendemodul angepasst ist, um die Informationen auf dem physikalischen Rücktransport-Uplinksteuerungskanal zu tragen, welche die Uplink-Steuerungsinformationen und ein Referenzsignal umfassen, und die ferner ein oder zwei Single Carrier Frequency Division Multiple Access Symbole, SC-FDMA-Symbole als Schutzintervall umfassen,
wobei Ressourcen des physikalischen Rücktransport-Uplinksteuerungskanals durch den Evolved Node B auf einem Rücktransport-Uplink-Subframe für die Relaisknotenvorrichtung konfiguriert werden, und
wenn ein vorheriger Uplink-Subframe des Rücktransport-Uplink-Subframes ein Rücktransport-Uplink-Subframe ist und ein späterer Subframe des Rücktransport-Uplink-Subframes ein Nicht-Rücktransport-Uplink-Subframe ist, die Relaisknotenvorrichtung ferner angepasst ist, um an den Evolved Node B ein letztes Single Carrier Frequency Division Multiple Access Symbol des physikalischen Rücktransport-Uplinksteuerungskanals zu senden, das als das Schutzintervall fungiert, wobei der Rücktransport-Uplink-Subframe einen Uplink-Subframe bezeichnet, der ausgestaltet ist, um das Uplinksignal durch die Relaisknotenvorrichtung an den Evolved Node B zu senden, und der Nicht-Rücktransport-Uplink-Subframe einen Uplink-Subframe bezeichnet, der nicht zum Senden des Uplinksignals durch die Relaisknotenvorrichtung an den Evolved Node B vorgesehen ist.

12. Vorrichtung nach Anspruch 11, wobei
wenn die Uplink-Steuerungsinformationen Bestätigungsinformationen oder negative Bestätigungsinformationen sind; im Fall, dass ein System einen normalen zyklischen Vorspann anwendet, Symbole #0 und #13 in einem Rücktransport-Uplink-Subframe als das Schutzintervall fungieren, Symbole #1, #5, #6, #7, #8 und #12 die Bestätigungsinformationen oder die negativen Bestätigungsinformationen tragen und Symbole #2, #3, #4, #9, #10 und #11 das Referenzsignal tragen; im Fall, dass das System einen erweiterten zyklischen Vorspann anwendet, Symbole #0 und #11 in dem Rücktransport-Uplink-Subframe als das Schutzintervall fungieren, Symbole #1, #4, #5, #6, #7 und #10 die Bestätigungsinformationen oder die negativen Bestätigungsinformationen tragen, und Symbole #2, #3, #8 und #9 das Referenzsignal tragen;
oder
wenn die Uplink-Steuerungsinformationen Informationen zur Kanalqualität sind; im Fall, dass das System den normalen zyklischen Vorspann anwendet, Symbole #0 und #13 in dem Rücktransport-Uplink-Subframe als das Schutzintervall fungieren, Symbole #2, #3, #4, #6, #7, #9, #10 und #11 die Informationen zur Kanalqualität tragen, und Symbole #1, #5, #8 und #12 das Referenzsignal tragen; im Fall, dass das System den erweiterten zyklischen Vorspann anwendet, Symbole #0 und #11 in dem Rücktransport-Uplink-Subframe als das Schutzintervall fungieren, Symbole #1, #2, #4, #5, #6, #7, #8 und #10 die Informationen zur Kanalqualität tragen und Symbole #3 und #9 das Referenzsignal tragen;
oder
wenn die Uplink-Steuerungsinformationen Bestätigungsinformationen oder negative Bestätigungsinformationen sind; im Fall, dass das System den normalen zyklischen Vorspann anwendet, Symbol #13 in einem Rücktransport-Uplink-Subframe als das Schutzintervall fungiert, Symbole #0, #1, #5, #6, #7, #8 und #12 die Bestätigungsinformationen oder die negativen Bestätigungsinformationen tragen und Symbole #2, #3, #4, #9, #10 und #11 das Referenzsignal tragen; im Fall, dass das System den erweiterten zyklischen Vorspann anwendet, Symbol #11 in dem Rücktransport-Uplink-Subframe als das Schutzintervall fungiert, Symbole #0, #1, #4, #5, #6, #7 und #10 die Bestätigungsinformationen oder die negativen Bestätigungsinformationen tragen und Symbole #2, #3, #8 und #9 das Referenzsignal tragen;
oder
wenn die Uplink-Steuerungsinformationen Informationen zur Kanalqualität sind; im Fall, dass das System den normalen zyklischen Vorspann anwendet, Symbol #13 in dem Rücktransport-Uplink-Subframe als das Schutzintervall fungiert, Symbole #0, #2, #3, #4, #6, #7, #9, #10 und #11 die Informationen zur Kanalqualität tragen und Symbole #1, #5, #8 und #12 das Referenzsignal tragen; im Fall, dass das System den erweiterten zyklischen Vorspann anwendet, Symbol #11 in dem Rücktransport-Uplink-Subframe als das Schutzintervall fungiert, Symbole #0, #1, #2, #4, #5, #6, #7, #8 und #10 die Informationen zur Kanalqualität tragen und Symbole #3 und #9 das Referenzsignal tragen;
oder
wenn die Uplink-Steuerungsinformationen Bestätigungsinformationen oder negative Bestätigungsinformationen sind; im Fall, dass das System den normalen zyklischen Vorspann anwendet, Symbol #0 in dem Rücktransport-Uplink-Subframe als das Schutzintervall fungiert, Symbole #1, #5, #6, #7, #8, #12 und #13 die Bestätigungsinformationen oder die negativen Bestätigungsinformationen tragen und Symbole #2, #3, #4, #9, #10 und #11 das Referenzsignal tragen; im Fall, dass das System den erweiterten zyklischen Vorspann anwendet, Symbol #0 in dem Rücktransport-Uplink-Subframe als das Schutzintervall fungiert, Symbole #1, #4, #5, #6, #7, #10 und #11 die Bestätigungsinformationen oder die negativen Bestätigungsinformationen tragen und Symbole #2, #3, #8 und #9 das Referenzsignal tragen;
oder
wenn die Uplink-Steuerungsinformationen Informationen zur Kanalqualität sind; im Fall, dass das System den normalen zyklischen Vorspann anwendet, Symbol #0 in dem Rücktransport-Uplink-Subframe als das Schutzintervall fungiert, Symbole #2, #3, #4, #6, #7, #9, #10, #11 und #13 die Informationen zur Kanalqualität tragen und Symbole #1, #5, #8 und #12 das Referenzsignal tragen; im Fall, dass das System den erweiterten zyklischen Vorspann anwendet, Symbol #0 in dem Rücktransport-Uplink-Subframe als das Schutzintervall fungiert, Symbole #1, #2, #4, #5, #6, #7, #8, #10 und #11 die Informationen zur Kanalqualität tragen und Symbole #3 und #9 das Referenzsignal tragen;
oder
wenn die Uplink-Steuerungsinformationen Bestätigungsinformationen oder negative Bestätigungsinformationen sind; im Fall, dass das System den normalen zyklischen Vorspann anwendet, Symbole #0 und #6 in dem Rücktransport-Uplink-Subframe als das Schutzintervall fungieren, Symbole #1 und #5 die Bestätigungsinformationen oder die negativen Bestätigungsinformationen tragen und Symbole #2, #3 und #4 das Referenzsignal tragen; im Fall, dass das System den erweiterten zyklischen Vorspann anwendet, Symbole #0 und #5 in dem Rücktransport-Uplink-Subframe als das Schutzintervall fungieren, Symbole #1 und #4 die Bestätigungsinformationen oder die negativen Bestätigungsinformationen tragen und Symbole #2 und #3 das Referenzsignal tragen.

## Revendications

1. Procédé pour envoyer des informations de commande de liaison montante par un noeud relais sur une liaison de backhaul, le procédé comprenant le fait de porter les informations de commande de liaison montante sur un Canal de commande de liaison montante physique de backhaul pour envoyer à un noeud B évolué, **caractérisé en ce que** ledit procédé comprend en outre :
le fait de porter des informations sur ledit Canal de commande de liaison montante physique de backhaul incluant les informations de commande de liaison montante et un signal de référence, et incluant en outre 1 ou 2 symboles d'Accès multiple par répartition en fréquence à Porteuse unique, SC-FDMA, comme un intervalle de garde,
dans lequel des ressources de Canal de commande de liaison montante physique de backhaul sur une sous-trame de liaison montante de backhaul pour le noeud relais sont configurées par ledit noeud B évolué, et
lorsqu'une sous-trame de liaison montante antérieure de ladite sous-trame de liaison montante de backhaul est une sous-trame de liaison montante de backhaul et qu'une sous-trame postérieure de ladite sous-trame de liaison montante de backhaul est une non sous-trame de liaison montante de backhaul, un dernier symbole d'Accès multiple par répartition en fréquence à Porteuse unique dudit Canal de commande de liaison montante physique de backhaul envoyé par ledit noeud relais audit noeud B évolué agit comme l'intervalle de garde,
dans lequel ladite sous-trame de liaison montante de backhaul fait référence à une sous-trame de liaison montante configurée pour envoyer ledit signal de liaison montante par ledit noeud relais audit noeud B évolué, et ladite non sous-trame de liaison montante de backhaul fait référence à une sous-trame de liaison montante qui n'est pas destinée à envoyer ledit signal de liaison montante par ledit noeud relais audit noeud B évolué.

2. Procédé selon la revendication 1, dans lequel
lorsqu'une sous-trame de liaison montante antérieure et une sous-trame postérieure de ladite sous-trame de liaison montante de backhaul sont toutes des non sous-trames de liaison de backhaul, un premier symbole d'Accès multiple par répartition en fréquence à Porteuse unique et un dernier symbole d'Accès multiple par répartition en fréquence à Porteuse unique dudit Canal de commande de liaison montante physique de backhaul envoyés par ledit noeud relais audit noeud B évolué agissent comme l'intervalle de garde.

3. Procédé selon la revendication 1 ou 2, dans lequel
lorsque lesdites informations de commande de liaison montante sont des informations d'accusé de réception ou d'accusé de réception négatif ;
dans un cas où un système adopte un préfixe cyclique normal, les symboles #0 et #13 dans la sous-trame de liaison montante de backhaul agissent comme l'intervalle de garde, les symboles #1, #5, #6, #7, #8 et #12 portent lesdites informations d'accusé de réception ou d'accusé de réception négatif, et les symboles #2, #3, #4, #9, #10 et #11 portent le Signal de référence ;
dans un cas où le système adopte un préfixe cyclique étendu, les symboles #0 et #11 dans la sous-trame de liaison montante de backhaul agissent comme l'intervalle de garde, les symboles #1, #4, #5, #6, #7 et #10 portent lesdites informations d'accusé de réception ou d'accusé de réception négatif, et les symboles #2, #3, #8 et #9 portent le Signal de référence.

4. Procédé selon la revendication 1 ou 2, dans lequel
lorsque lesdites informations de commande de liaison montante sont des informations de qualité de canal ;
dans un cas où un système adopte le préfixe cyclique normal, les symboles #0 et #13 dans la sous-trame de liaison montante de backhaul agissent comme l'intervalle de garde, les symboles #2, #3, #4, #6, #7, #9, #10 et #11 portent lesdites informations de qualité de canal, et les symboles #1, #5, #8 et #12 portent le Signal de référence ;
dans un cas où le système adopte le préfixe cyclique étendu, les symboles #0 et #11 dans la sous-trame de liaison montante de backhaul agissent comme l'intervalle de garde, les symboles #1, #2, #4, #5, #6, #7, #8 et #10 portent lesdites informations de qualité de canal, et les symboles #3 et #9 portent le Signal de référence.

5. Procédé selon la revendication 1, dans lequel
lorsque lesdites informations de commande de liaison montante sont des informations d'accusé de réception ou d'accusé de réception négatif ;
dans un cas où un système adopte le préfixe cyclique normal, le symbole #13 dans la sous-trame de liaison montante de backhaul agit comme l'intervalle de garde, les symboles #0, #1, #5, #6, #7, #8 et #12 portent lesdites informations d'accusé de réception ou d'accusé de réception négatif, et les symboles #2, #3, #4, #9, #10 et #11 portent le Signal de référence ;
dans un cas où le système adopte le préfixe cyclique étendu, le symbole #11 dans la sous-trame de liaison montante de backhaul agit comme l'intervalle de garde, les symboles #0, #1, #4, #5, #6, #7 et #10 portent lesdites informations d'accusé de réception ou d'accusé de réception négatif, et les symboles #2, #3, #8 et #9 portent le Signal de référence.

6. Procédé selon la revendication 1, dans lequel
lorsque lesdites informations de commande de liaison montante sont des informations de qualité de canal ;
dans un cas où un système adopte le préfixe cyclique normal, le symbole #13 dans la sous-trame de liaison montante de backhaul agit comme l'intervalle de garde, les symboles #0, #2, #3, #4, #6, #7, #9, #10 et #11 portent lesdites informations de qualité de canal, et les symboles #1, #5, #8 et #12 portent le Signal de référence ;
dans un cas où le système adopte le préfixe cyclique étendu, le symbole #11 dans la sous-trame de liaison montante de backhaul agit comme l'intervalle de garde, les symboles #0, #1, #2, #4, #5, #6, #7, #8 et #10 portent lesdites informations de qualité de canal, et les symboles #3 et #9 portent le Signal de référence.

7. Procédé selon la revendication 1, dans lequel
lorsqu'une sous-trame de liaison montante antérieure de ladite sous-trame de liaison montante de backhaul est une non sous-trame de liaison de backhaul et qu'une sous-trame postérieure de ladite sous-trame de liaison montante de backhaul est une sous-trame de liaison de backhaul, un premier symbole d'Accès multiple par répartition en fréquence à Porteuse unique dudit Canal de commande de liaison montante physique de backhaul envoyé par ledit noeud relais audit noeud B évolué agit comme l'intervalle de garde.

8. Procédé selon la revendication 1 ou 7, dans lequel
lorsque lesdites informations de commande de liaison montante sont des informations d'accusé de réception ou d'accusé de réception négatif ;
dans un cas où un système adopte le préfixe cyclique normal, le symbole #0 dans la sous-trame de liaison montante de backhaul agit comme l'intervalle de garde, les symboles #1, #5, #6, #7, #8, #12 et #13 portent lesdites informations d'accusé de réception ou d'accusé de réception négatif, et les symboles #2, #3, #4, #9, #10 et #11 portent le Signal de référence ;
dans un cas où le système adopte le préfixe cyclique étendu, le symbole #0 dans la sous-trame de liaison montante de backhaul agit comme l'intervalle de garde, les symboles #1, #4, #5, #6, #7, #10 et #11 portent lesdites informations d'accusé de réception ou d'accusé de réception négatif, et les symboles #2, #3, #8 et #9 portent le Signal de référence.

9. Procédé selon la revendication 1 ou 7, dans lequel
lorsque lesdites informations de commande de liaison montante sont des informations de qualité de canal ;
dans un cas où un système adopte le préfixe cyclique normal, le symbole #0 dans la sous-trame de liaison montante de backhaul agit comme l'intervalle de garde, les symboles #2, #3, #4, #6, #7, #9, #10, #11 et #13 portent lesdites informations de qualité de canal, et les symboles #1, #5, #8 et #12 portent le Signal de référence ;
dans un cas où le système adopte le préfixe cyclique étendu, le symbole #0 dans la sous-trame de liaison montante de backhaul agit comme l'intervalle de garde, les symboles #1, #2, #4, #5, #6, #7, #8, #10 et #11 portent lesdites informations de qualité de canal, et les symboles #3 et #9 portent le Signal de référence.

10. Procédé selon la revendication 1, dans lequel
lorsque lesdites informations de commande de liaison montante sont des informations d'accusé de réception ou d'accusé de réception négatif ;
dans un cas où un système adopte le préfixe cyclique normal, les symboles #0 et #6 dans la sous-trame de liaison montante de backhaul agissent comme l'intervalle de garde, les symboles #1 et #5 portent lesdites informations d'accusé de réception ou d'accusé de réception négatif, et les symboles #2, #3 et #4 portent le Signal de référence ;
dans un cas où le système adopte le préfixe cyclique étendu, les symboles #0 et #5 dans la sous-trame de liaison montante de backhaul agissent comme l'intervalle de garde, les symboles #1 et #4 portent lesdites informations d'accusé de réception ou d'accusé de réception négatif, et les symboles #2 et #3 portent le Signal de référence.

11. Appareil de noeud relais pour envoyer des informations de commande de liaison montante sur une liaison de backhaul, et ledit appareil de noeud relais comprenant : un module d'envoi qui est configuré pour porter les informations de commande de liaison montante sur un Canal de commande de liaison montante physique de backhaul pour envoyer à un noeud B évolué, l'appareil de noeud relais étant **caractérisé en ce que**
le module d'envoi est adapté pour porter les informations sur le Canal de commande de liaison montante physique de backhaul incluant les informations de commande de liaison montante et un signal de référence, et incluant en outre 1 ou 2 symboles d'Accès multiple par répartition en fréquence à Porteuse unique, SC-FDMA, comme un intervalle de garde,
dans lequel des ressources de Canal de commande de liaison montante physique de backhaul sont configurées par ledit noeud B évolué sur une sous-trame de liaison montante de backhaul pour l'appareil de noeud relais, et
lorsqu'une sous-trame de liaison montante antérieure de ladite sous-trame de liaison montante de backhaul est une sous-trame de liaison montante de backhaul et qu'une sous-trame postérieure de ladite sous-trame de liaison montante de backhaul est une non sous-trame de liaison montante de backhaul, l'appareil de noeud relais est en outre adapté pour envoyer audit noeud B évolué un dernier symbole d'Accès multiple par répartition en fréquence à Porteuse unique dudit Canal de commande de liaison montante physique de backhaul qui agit comme l'intervalle de garde,
dans lequel ladite sous-trame de liaison montante de backhaul fait référence à une sous-trame de liaison montante configurée pour envoyer ledit signal de liaison montante par ledit appareil de noeud relais audit noeud B évolué, et ladite non sous-trame de liaison montante de backhaul fait référence à une sous-trame de liaison montante qui n'est pas destinée à envoyer ledit signal de liaison montante par ledit appareil de noeud relais audit noeud B évolué.

12. Appareil selon la revendication 11, dans lequel
lorsque lesdites informations de commande de liaison montante sont des informations d'accusé de réception ou d'accusé de réception négatif ; dans un cas où un système adopte un préfixe cyclique normal, les symboles #0 et #13 dans une sous-trame de liaison montante de backhaul agissent comme l'intervalle de garde, les symboles #1, #5, #6, #7, #8 et #12 portent lesdites informations d'accusé de réception ou d'accusé de réception négatif, et les symboles #2, #3, #4, #9, #10 et #11 portent le Signal de référence ; dans un cas où le système adopte un préfixe cyclique étendu, les symboles #0 et #11 dans la sous-trame de liaison montante de backhaul agissent comme l'intervalle de garde, les symboles #1, #4, #5, #6, #7 et #10 portent lesdites informations d'accusé de réception ou d'accusé de réception négatif, et les symboles #2, #3, #8 et #9 portent le Signal de référence ; ou
lorsque lesdites informations de commande de liaison montante sont des informations de qualité de canal ; dans le cas où le système adopte le préfixe cyclique normal, les symboles #0 et #13 dans la sous-trame de liaison montante de backhaul agissent comme l'intervalle de garde, les symboles #2, #3, #4, #6, #7, #9, #10 et #11 portent lesdites informations de qualité de canal, et les symboles #1, #5, #8 et #12 portent le Signal de référence ; dans le cas où le système adopte le préfixe cyclique étendu, les symboles #0 et #11 dans la sous-trame de liaison montante de backhaul agissent comme l'intervalle de garde, les symboles #1, #2, #4, #5, #6, #7, #8 et #10 portent lesdites informations de qualité de canal, et les symboles #3 et #9 portent le Signal de référence ; ou
lorsque lesdites informations de commande de liaison montante sont des informations d'accusé de réception ou d'accusé de réception négatif ; dans le cas où le système adopte le préfixe cyclique normal, le symbole #13 dans une sous-trame de liaison montante de backhaul agit comme l'intervalle de garde, les symboles #0, #1, #5, #6, #7, #8 et #12 portent lesdites informations d'accusé de réception ou d'accusé de réception négatif, et les symboles #2, #3, #4, #9, #10 et #11 portent le Signal de référence ; dans le cas où le système adopte le préfixe cyclique étendu, le symbole #11 dans la sous-trame de liaison montante de backhaul agit comme l'intervalle de garde, les symboles #0, #1, #4, #5, #6, #7 et #10 portent lesdites informations d'accusé de réception ou d'accusé de réception négatif, et les symboles #2, #3, #8 et #9 portent le Signal de référence ; ou
lorsque lesdites informations de commande de liaison montante sont des informations de qualité de canal ; dans le cas où le système adopte le préfixe cyclique normal, le symbole #13 dans la sous-trame de liaison montante de backhaul agit comme l'intervalle de garde, les symboles #0, #2, #3, #4, #6, #7, #9, #10 et #11 portent lesdites informations de qualité de canal, et les symboles #1, #5, #8 et #12 portent le Signal de référence ; dans le cas où le système adopte le préfixe cyclique étendu, le symbole #11 dans la sous-trame de liaison montante de backhaul agit comme l'intervalle de garde, les symboles #0, #1, #2, #4, #5, #6, #7, #8 et #10 portent lesdites informations de qualité de canal, et les symboles #3 et #9 portent le Signal de référence ; ou
lorsque lesdites informations de commande de liaison montante sont des informations d'accusé de réception ou d'accusé de réception négatif ; dans le cas où le système adopte le préfixe cyclique normal, le symbole #0 dans la sous-trame de liaison montante de backhaul agit comme l'intervalle de garde, les symboles #1, #5, #6, #7, #8, #12 et #13 portent lesdites informations d'accusé de réception ou d'accusé de réception négatif, et les symboles #2, #3, #4, #9, #10 et #11 portent le Signal de référence ; dans le cas où le système adopte le préfixe cyclique étendu, le symbole #0 dans la sous-trame de liaison montante de backhaul agit comme l'intervalle de garde, les symboles #1, #4, #5, #6, #7, #10 et #11 portent lesdites informations d'accusé de réception ou d'accusé de réception négatif, et les symboles #2, #3, #8 et #9 portent le Signal de référence ; ou
lorsque lesdites informations de commande de liaison montante sont des informations de qualité de canal ; dans le cas où le système adopte le préfixe cyclique normal, le symbole #0 dans la sous-trame de liaison montante de backhaul agit comme l'intervalle de garde, les symboles #2, #3, #4, #6, #7, #9, #10, #11 et #13 portent lesdites informations de qualité de canal, et les symboles #1, #5, #8 et #12 portent le Signal de référence ; dans le cas où le système adopte le préfixe cyclique étendu, le symbole #0 dans la sous-trame de liaison montante de backhaul agit comme l'intervalle de garde, les symboles #1, #2, #4, #5, #6, #7, #8, #10 et #11 portent lesdites informations de qualité de canal, et les symboles #3 et #9 portent le Signal de référence ; ou
lorsque lesdites informations de commande de liaison montante sont des informations d'accusé de réception ou d'accusé de réception négatif ; dans le cas où le système adopte le préfixe cyclique normal, les symboles #0 et #6 dans la sous-trame de liaison montante de backhaul agissent comme l'intervalle de garde, les symboles #1 et #5 portent lesdites informations d'accusé de réception ou d'accusé de réception négatif, et les symboles #2, #3 et #4 portent le Signal de référence ; dans le cas où le système adopte le préfixe cyclique étendu, les symboles #0 et #5 dans la sous-trame de liaison montante de backhaul agissent comme l'intervalle de garde, les symboles #1 et #4 portent lesdites informations d'accusé de réception ou d'accusé de réception négatif, et les symboles #2 et #3 portent le Signal de référence.
